# EUROPEAN PATENT SPECIFICATION

(11) **EP 0 346 301 B1**
(45) Date of publication and mention of the grant of the patent: **16.06.1993**
(21) Application number: 89830250.0
(22) Date of filing: 06.06.1989
(51) Int. Cl.: B01D 50/00, B01D 45/16, B01D 46/02

(54) **A filter for the separation of oily fumes**
Filter zur Abtrennung von Öldämpfen
Filtre pour la séparation des vapeurs d'huile

(30) Priority: 10.06.1988 IT 5322188
(43) Date of publication of application: 13.12.1989
(73) Proprietor: CORAL S.p.A., 10040 Leini (Torino) (IT)
(72) Inventor: Coral, Luciano c/o Coral S.p.A, I-10040 Leini' (Torino) (IT)
(74) Representative: Jacobacci, Filippo

(56) References cited:
- EP-A- 0 063 288
- FR-A- 883 225
- GB-A- 2 169 822
- US-A- 4 350 504
- US-A- 4 516 994
- US-A- 4 537 608

## Description

The present invention relates to filters for use in working environments to separate oily fumes.

The object of the invention is to provide a filter which can achieve very effective separation of the oily particles from the air of an environment in which oily fumes are present.

This object is achieved by the combination of features which form the subject matter of claim 1.

The wire mesh tube surrounding the helical element captures the oil particles separated from the air stream by centrifugal action and therefore avoids that the separated oil particles become reentrained in the air flowing in the vertical tube, thus increasing the efficiency of the centrifugal separator and ensuring a longer life of the additional filters.

According to a preferred embodiment of the invention the wire mesh tube surrounding the helical element is spaced from the inner surface of the vertical duct, thus providing an annular chamber in which the collected oil particles are isolated from the air flow, whereby the risk of reetrainment of the oil particles by the air flowing in the vertical duct is further reduced.

FR-A-883225 concerns a filter for separating ashes, that is solid matter, from the gas produced by a gas generator. The gas passes through a centrifugal mechanical separator in which the more heavy ashes are driven against the cylindrical wall of a vertical tube (6) containing a helical element (7) and fall into a lower collecting hopper (2) having a discharge opening (3). The gas from the tube (6) passes upwardly through an additional filter formed by an annular chamber filled with filtering material, in which the lighter solid particles are separated, and reaches an outlet pipe (11).

The filter disclosed in this document would not be suitable for separating oil particles from the air of an environment in which oily fumes are present, because a substantial portion of the light oil particles driven by centrifugal action against the wall of the vertical tube would became reentrained by the air flowing in said tube, which would cause a premature clogging of the additional filter.

US-A-4 516 994 discloses an apparatus for separating and recovering oil droplets suspended in a pressurised hot refrigerant gas circulating in a refrigerant system. The apparatus comprises a centrifugal separator constituted by a vertical duct in which a helical element is mounted, said element being in contact with the inner wall of the duct.

The vertical duct of the centrifugal separtor extends about 2/3 of the way into the bore of a hollow cylindrical fine-mesh filter which is closed at its lower end, said duct being spaced from the inner wall of the filter.

Most of the oil separated by the centrifugal separator passes through the lower end of the filter and most of the gas passes through the upper end of the filter.

The filtered gas collects in an annular chamber which surrounds the filter and is provided with an upper gas outlet pipe.

The filtered oil drained from the exterior of the filter collects by gravity in an end cap at the bottom of the annular chamber.

GB-A-2 169 822 is directed to a centrifugal separator for separating moisture from the stream used for feeding the turbine of a pressurised water nuclear reactor. Steam is fed from the bottom into a riser tube containing in its lower portion a helical element and provided with holes in its upper portion. The riser tube is surrounded by an outer tube. Water is separated from steam in the lower portion of the riser tube, passes through its upper holes and discharges downwardly through the annular space comprises between the riser tube and the outer tube.

Further characteristics and advantages of the present invention will become clear from the description which follows with reference to the appended drawings, provided by way of non-limiting example, in which:

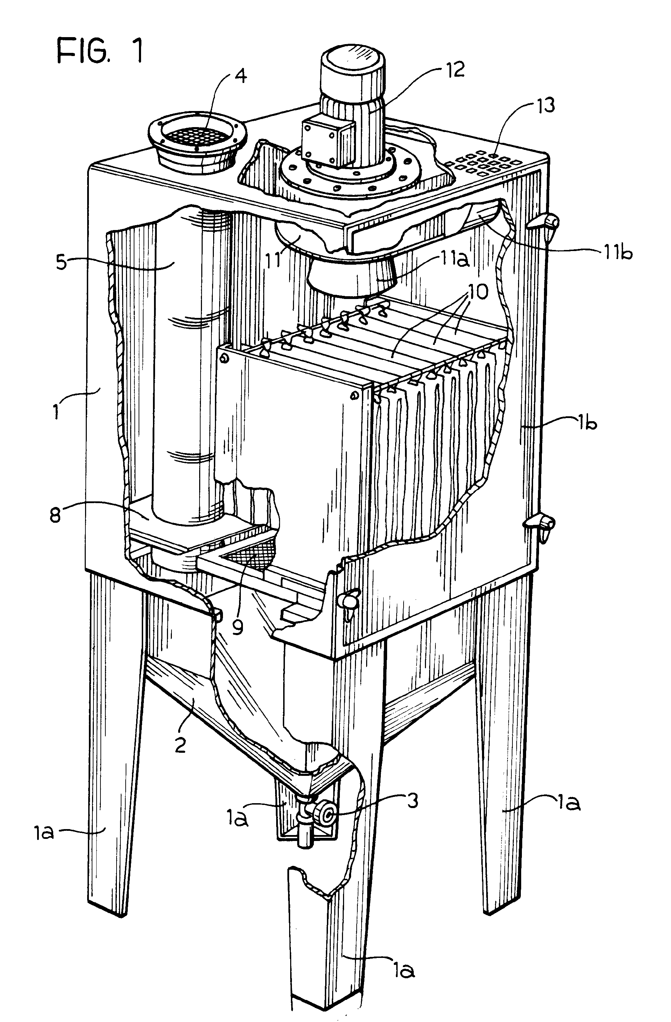

Figure 1 is a partially-sectioned perspective view of a filter for the separation of oily fumes according to the invention,
Figure 2 is a partial vertical section of the filter according to Figure 1, and
Figure 3 is a detail of Figure 2, on an enlarged scale.

In the drawing, a parallelepipedal casing, indicated 1, is supported by legs 1a and has a door 1b for access to the inside of the casing.

A hopper 2 is provided at the bottom of the casing and its base has an outlet controlled by an obturator 3 which is constituted by a tap in the example illustrated, but could be constituted by other means, such as, for example, a screw plug or the like.

The top of the casing 1 has an air intake 4 which communicates with a tube 5 extending substantially vertically within the casing 1 and opening into the collecting hopper 2 at its lower end.

A fixed helical element constituted by a band 6 wound helically around a central cylindrical shaft 6a is arranged in the tube 5.

The helical element 6 is surrounded by a wire mesh tube 7 interposed between the helical element and the inner wall of the tube 5.

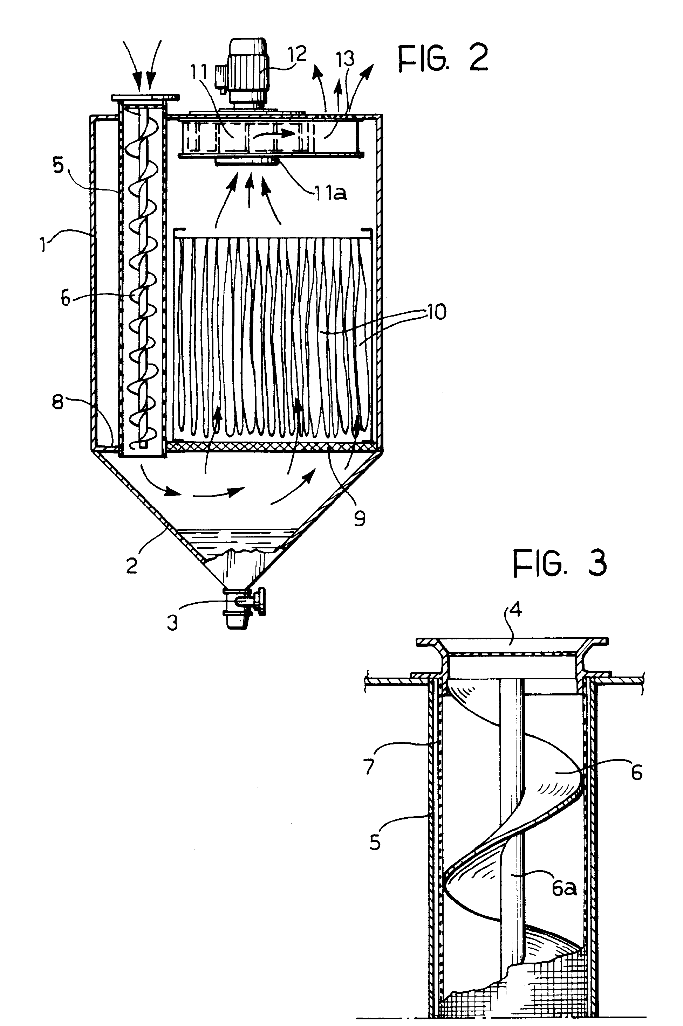

As shown in figure 3, the wire mesh tube 7 surrounding the helical element 6 is spaced from the inner surface of the tube 5 and the air intake 4 comprises a tubular extension which fits into the upper end of the wire mesh tube 7 and a radial flange which closes the upper end of the annular chamber comprised between the wire mesh tube 7 and the tube 5.

The tube 5 passes through a horizontal dividing wall 8 and opens into the hopper 2 below.

A wire mesh filter, indicated 9, is situated horizontally at the bottom of the casing 1 beside the wall 8, and conventional filtering means, indicated 10, are arranged in the casing 1 above the mesh filter 9.

In the example illustrated, these filtering means are constituted by a pocket-type filter. According to requirements, other types of filters may be used, for example, activated-carbon filters.

Above the filter 10, the upper wall of the casing 1 carries a centrifugal aspirator 11 operated by an electric motor 12 and having an intake opening 11a and a delivery duct 11b which leads to a delivery opening 13.

The filter described above operates in the following manner.

The air from the environment in which the oil particles are suspended is drawn in through the air intake 4, as a result of the vacuum created within the casing 1 by the centrifugal aspirator 11, and passes through the vertical duct constituted by the tube 5, in which the oil particles are separated mechanically by centrifugal action due to the rotation of the air imparted by the helical element 6. The oil particles thus separated collect on the wall of the tube 5, where they are held by the wire mesh 7 and drain into the collecting hopper 2 from which they are periodically drained by the operation of the obturator 3.

The air from the duct 5 is further filtered as it passes through the metal filter 9 and the pocket-type filter 10 and is sent to the delivery opening 13 by the centrifugal aspirator 11 for return to the environment.

The combined effect of the mechanical separation of the oil particles in the duct 5 and the filtration by the metal filter 9 and the pocket-type filter 10 ensures very effective cleaning of the air of an environment in which oily fumes are present.

## Claims

1. A filter for the separation of oily fumes comprising:
- a closed casing (1) with a collecting hopper (2) at the bottom and an upper air intake (4) which communicates with a centrifugal mechanical separator constituted by a vertical duct (5) whose lower end extends through a horizontal dividing wall (8) and opens into the collecting hopper (2), a fixed helical element (6) being inserted in said duct (5),
- a wire mesh tube (7) interposed between the helical element (6) and the inner wall of the vertical duct (5), said wire mesh tube (7) surrounding the helical element (6), and
- additional filtering means (9, 10) interposed in the path of the air between the lower end of the duct (5) and a delivery opening (13) which is situated at the top of the casing (1) and adjacent which air induction means (11) are provided in order to cause a flow of air from the environment through the apparatus,
- whereby the oily particles separated from the air by the centrifugal separator collect. on the wall of the tube (5) where they are held by the wire mesh (7) and drain into the collecting hopper (2) and the air is further filtered by the additional filtering means (9, 10) before reaching the delivery opening (13).

2. A filter as claimed in Claim 1, characterised in that the wire mesh tube (7) surrounding the helical element (6) is spaced from the inner surface of the vertical duct (5), the air intake (4) conveying the air into the upper end of said wire mesh tube (7).

3. A filter as claimed in Claim 2, characterised in that the air intake (4) comprises a tubular extension which fits into the upper end of the wire mesh tube (7) and a radial flange which closes the upper end of the annular chamber comprised between the wire mesh tube (7) and the vertical duct (5).

## Patentansprüche

1. Filter für die Abscheidung von ölhaltigen Dämpfen, wobei der Filter enthält:
ein geschlossenes Gehäuse (1) mit einem Sammeltrichter (2) am Boden und einem oberen Lufteinlaß (4), der mit einem mechanischen Zentrifugalabscheider in Verbindung steht, der von einem vertikalen Kanal (5) gebildet wird, dessen unteres Ende durch eine horizontale Trennwand (8) verläuft und sich in den Sammeltrichter (2) öffnet, wobei ein ortsfestes Schneckenelement (6) in diesen Kanal (5) eingesetzt ist,
ein Drahtmaschenrohr (7), das zwischen dem Schneckenelement (6) und der Innenwand des vertikalen Kanals (5) liegt, wobei das Drahtmaschenrohr (7) das Schneckenelement (6) umgibt, und
eine zusätzliche Filtereinrichtung (9, 10), die im Weg der Luft zwischen dem unteren Ende des Kanals (5) und einer Abgabeöffnung (13) liegt, die an der Oberseite des Gehäuses (1) angeordnet ist und neben der eine Luftzuführeinrichtung (11) vorgesehen ist, um einen Luftstrom von der Umgebung durch die Vorrichtung hervorzurufen,
wobei sich die von der Luft durch den Zentrifugalabscheider abgeschiedenen ölhaltigen Teilchen an der Wand des Rohrs (5) sammeln, wo sie von den Drahtmaschen (7) gehalten werden und in den Sammeltrichter (2) ablaufen, und wobei die Luft durch die zusätzliche Filtereinrichtung (9, 10) weiter gefiltert wird, bevor sie die Abgabeöffnung (13) erreicht.

2. Filter gemäß Anspruch 1, dadurch gekennzeichnet, daß das Drahtmaschenrohr (7), das das Schneckenelement (6) umgibt, von der Innenfläche des vertikalen Kanals (5) beabstandet ist, wobei der Lufteinlaß (4) die Luft in das obere Ende des Drahtmaschenrohrs (7) leitet.

3. Filter gemäß Anspruch 2, dadurch gekennzeichnet, daß der lufteinlaß (4) eine rohrartige Verlängerung, die in das obere Ende des Drahtmaschenrohrs (7) paßt, sowie einen radialen Flansch enthält, der das obere Ende der Ringkammer verschließt, die zwischen dem Drahtmaschenrohr (7) und dem vertikalen Kanal (5) vorhanden ist.

## Revendications

1. Filtre pour la séparation de vapeurs d'huile comportant :
- un caisson fermé (1) dont le fond est muni d'une trémie collectrice (2) et comportant un orifice d'admission d'air supérieur (4) qui communique avec un séparateur mécanique centrifuge constitué par un conduit vertical (5) dont l'extrémité inférieure s'étend à travers une paroi de partition horizontale (8) et qui débouche dans une trémie collectrice (2), un élément hélicoïdal fixe (6) étant inséré dans ledit conduit (5),
- un tube à grillage métallique (7) interposé entre l'élément hélicoïdal (6) et la paroi intérieur du conduit vertical (5) ledit tube à grillage métallique (7) entourant l'élément hélicoïdal (6), et
- des moyens de filtrage supplémentaires (9, 10) interposé sur le trajet de l'air entre l'extrémité inférieure du conduit (5) et un orifice de décharge (13) situé à la partie supérieure du caisson (1), et au voisinage de laquelle sont prévus des moyens d'introduction d'air (11) afin de créer une circulation d'air depuis l'environnement et à travers l'appareil,
- grâce à quoi les particules d'huile séparées de l'air par le séparateur centrifuge, sont collectées sur la paroi du tube (5) où elles sont maintenues par le grillage métallique (7) et drainées dans la trémie par des moyens de filtrage supplémentaires (9, 10) avant d'atteindre l'orifice de décharge (13).

2. Filtre selon la revendication 1, caractérisé en ce que le tube à grillage métallique (7) entourant l'élément hélicoïdal (6) est espacé de la surface intérieure du conduit vertical (5), l'orifice d'admission d'air (4) amenant l'air à l'intérieur de l'extrémité supérieure dudit tube à grillage métallique (7).

3. Filtre selon la revendication 2, caractérisé en ce que l'orifice d'admission d'air (4) comporte une extension tubulaire qui s'ajuste dans l'extrémité supérieure du tube à grillage métallique (7) et une bride radiale qui ferme l'extrémité supérieure de la chambre annulaire comprise entre le tube à grillage métallique (7) et le conduit vertical (5).
